# FASCICULE DE BREVET EUROPEEN

(11) **EP 3 523 487 B1**
(45) Date de publication et mention de la délivrance du brevet: **22.07.2020**
(21) Numéro de dépôt: 17780501.7
(22) Date de dépôt: 25.09.2017
(51) Int. Cl.: E03D 1/32, F16L 5/02

(54) **ROBINET DE REMPLISSAGE À MONTAGE RAPIDE POUR RÉSERVOIR DE TOILETTES, ET RÉSERVOIR ÉQUIPÉ D'UN TEL ROBINET DE REMPLISSAGE**
SCHNELL BEFESTIGBARES FÜLLVENTIL FÜR EINEN TOILETTENSPÜLKASTEN UND MIT EINEM FÜLLVENTIL DIESER ART AUSGESTATTETER SPÜLKASTEN
A QUICK-MOUNT FILL VALVE FOR A TOILET TANK, AND TANK FITTED WITH A FILL VALVE OF THIS KIND

(30) Priorité: 07.10.2016 FR 1659708
(43) Date de publication de la demande: 14.08.2019
(73) Titulaire: Wirquin Plastiques, 44470 Carquefou (FR)
(72) Inventeur: LE COENT, Daniel, 44470 Carquefou (FR); RABESAOTRA, Paul, 44470 Carquefou (FR)
(74) Mandataire: Gicquel, Frédéric
(86) Numéro de dépôt international: PCT/FR2017/052567
(87) Numéro de publication internationale: WO 2018/065694

(56) Documents cités:
- FR-A1- 3 031 994
- US-B1- 6 823 889

## Description

Le domaine de l'invention est celui de la conception et de la fabrication d'équipements sanitaires. Plus précisément, l'invention concerne un robinet de remplissage destiné à être monté sur un réservoir de chasse d'eau.

Les réservoirs de chasse d'eau incluent classiquement :
- un bâti destiné à être monté à l'intérieur du réservoir et comprenant un moyen d'obturation mobile entre une position basse d'obturation, dans laquelle il obture un orifice de passage d'eau ménagé dans une paroi inférieure du réservoir, à la base de celui-ci et, une position haute de libération de l'orifice de passage d'eau (autorisant ainsi la libération d'une petite ou d'une grande chasse d'eau en direction de la cuvette des toilettes), un dispositif de commande, monté par exemple sur le couvercle du réservoir, permettant d'actionner le moyen d'obturation ;
- un robinet de remplissage, destiné à assurer la distribution d'eau après chaque chasse d'eau pour remplir le réservoir d'un volume d'eau prédéterminé.

Ces robinets de remplissage sont très fréquemment montés sur le fond du réservoir. Un tel robinet est connu du document US 6,385,788 B1.

Classiquement, un about de raccordement est utilisé pour relier le robinet de remplissage monté à l'intérieur du réservoir à un conduit externe au réservoir, relié au réseau d'alimentation en eau.

Alternativement, le robinet de remplissage intègre :
- un corps principal destiné à s'étendre à l'intérieur du réservoir ;
- une extrémité de raccordement dans le prolongement du corps principal, destinée à s'étendre à l'extérieur du réservoir.

Pour le montage du robinet de remplissage, la paroi du réservoir de chasse d'eau présente un orifice destiné à être traversé par l'extrémité de raccordement.

Selon une technique de montage traditionnelle, l'extrémité de raccordement présente une structure générale en deux parties :
- un corps fileté, traversant l'orifice de réservoir de chasse d'eau, et destiné à s'étendre en partie à l'extérieur du réservoir ;
- une collerette-écrou, vissé sur le corps fileté, et destinée à s'étendre à l'intérieur du réservoir pour venir exercer un appui sur la face interne du réservoir, un contre-écrou étant destiné à être vissé sur le corps fileté, à l'extérieur du réservoir, pour venir exercer un appui contre la face externe du réservoir.

Le montage d'un robinet de remplissage comprend les étapes suivantes :
- insertion du robinet de remplissage dans le réservoir ;
- positionnement et insertion de l'extrémité de raccordement dans l'orifice du réservoir ;
- vissage du contre-écrou, sur le corps fileté, à l'extérieur du réservoir, jusqu'à serrage du contre-écrou contre la face externe du réservoir (la collerette-écrou étant alors plaquée contre la face interne du réservoir, avec en général un joint intercalé entre la collerette-écrou et la face interne du réservoir).

En pratique, le montage d'un robinet de remplissage sur le fond d'un réservoir s'avère relativement incommode.

En effet, l'installateur doit avoir une main à l'intérieur du réservoir pour maintenir en position le robinet de remplissage par rapport à l'orifice au fond du réservoir, et l'autre main sous le fond du réservoir (donc à l'extérieur du réservoir) pour visser jusqu'à serrage le contre-écrou sur l'extrémité de raccordement.

Outre l'inconfort que cette opération impose à l'installateur, cette phase de montage s'avère consommatrice de temps qui peuvent, pour les fabricants et vendeurs de réservoirs pré-équipés, constituer, sur un nombre élevé de réservoirs, représenter des postes de temps et donc de coûts non négligeables.

L'invention a notamment pour objectif de pallier ces inconvénients de l'art antérieur.

Plus précisément, l'invention a pour objectif de proposer un robinet de remplissage destiné à être monté sur une paroi d'un réservoir de chasse d'eau, qui permette son installation sur le réservoir de façon plus rapide et plus pratique que les robinets de remplissage de l'art antérieur.

Cet objectif, ainsi que d'autres qui apparaîtront par la suite, est atteint grâce à l'invention qui a pour objet un robinet de remplissage destiné à être installé sur un réservoir de toilettes comprenant une paroi présentant un orifice dédié au passage du robinet de remplissage et s'étendant entre une face interne et une face externe du réservoir, le robinet de remplissage comprenant :
- un corps principal destiné à s'étendre à l'intérieur du réservoir ;
- une extrémité de raccordement destinée à s'étendre à l'extérieur du réservoir,

caractérisé en ce que la butée externe est solidaire axialement de l'extrémité de raccordement et est radialement déformable pour se rétracter radialement à l'intérieur de l'orifice de la paroi du réservoir lors d'un passage de l'intérieur vers l'extérieur du réservoir, et se déployer radialement pour former une butée contre la face externe du réservoir, et en ce que la butée interne est montée mobile axialement sur le corps principal pour former un étau avec la butée externe, le corps principal comprenant un dispositif de serrage de l'étau, le dispositif de serrage comprenant un levier à came destiné à agir sur la butée interne pour exercer un serrage de l'étau.

Ainsi, grâce à l'invention, l'installation d'un robinet de remplissage à l'intérieur d'un réservoir de chasse d'eau, sur le fond ou sur une paroi latérale de celui-ci, peut être réalisée de façon notablement plus rapide et plus pratique qu'avec les robinets de remplissage de l'art antérieur.

En effet, il suffit à l'installateur de :
- introduire le robinet de remplissage dans le réservoir ;
- insérer l'extrémité de raccordement du robinet dans l'orifice prévu à cet effet dans le fond ou la paroi latérale du réservoir ;
- engager l'extrémité de raccordement dans l'orifice en forçant la butée externe à se rétracter radialement lors de son passage de l'intérieur vers l'extérieur du réservoir ;
- poursuivre l'engagement jusqu'à ce que la butée externe sorte de l'orifice, se déployant alors radialement (ce déploiement s'accompagnant d'un clic sonore signalant à l'installateur que la butée externe est bien à l'extérieur du réservoir) ;
- actionner le dispositif de serrage, de l'intérieur du réservoir.

On comprend donc que l'ensemble de l'installation s'opère de l'intérieur du réservoir, ce qui se traduit en un gain de temps et une commodité pour l'installateur.

Par ailleurs, le mode de serrage à l'aide du levier à came s'avère particulièrement rapide et pratique à actionner.

Selon une solution avantageuse, le levier à came est avantageusement monté de façon ajustable en position sur le corps principal.

Suivant les fabricants, les réservoirs peuvent présenter des épaisseurs de paroi différentes. L'option consistant à permettre l'ajustement en hauteur du dispositif de serrage permet donc une adaptation aux différents réservoirs.

Dans le cadre de cette option, le corps principal présente préférentiellement une portion filetée, et le levier à came est ajustable en position par l'intermédiaire d'une bague vissable/dévissable sur la portion filetée.

L'ajustement en hauteur du levier à came s'opère de façon intuitive par l'installateur, et avec précision.

Avantageusement, le robinet de remplissage comprend un joint destiné à être intercalé entre la butée interne et la face interne du fond du réservoir.

Dans ce cas, le joint présente avantageusement une face inférieure pourvue d'une extension tronconique.

Une telle extension tronconique contribue à assurer une bonne étanchéité du montage.

Selon une autre caractéristique avantageuse, la butée externe prend la forme d'une bague pourvue de clips radialement déformables.

Dans ce cas, les clips comprennent avantageusement :
- une base flexible ;
- une surface de contact en appui sur la face externe de la paroi du réservoir, reliée à la base flexible par un corps présentant une rampe externe ;
- une extrémité de centrage à l'intérieur de l'orifice.

L'invention concerne également un réservoir d'eau pour toilettes, incluant au moins un robinet de remplissage, le réservoir comprenant une paroi présentant un orifice dédié au passage du robinet de remplissage et s'étendant entre une face interne et une face externe du réservoir, le robinet de remplissage comprenant :
- un corps principal s'étendant à l'intérieur du réservoir et portant une butée interne ;
- une extrémité de raccordement s'étendant à l'extérieur du réservoir et portant une butée externe,
caractérisé en ce que la butée externe est solidaire axialement de l'extrémité de raccordement et est radialement déformable pour se rétracter radialement à l'intérieur de l'orifice de la paroi du réservoir lors d'un passage de l'intérieur vers l'extérieur du réservoir, et se déployer radialement pour former une butée contre la face externe du réservoir, et en ce que la butée interne est montée mobile axialement sur le corps principal pour former un étau avec la butée externe, le corps principal comprenant un dispositif de serrage de l'étau et en ce que la butée interne est montée mobile axialement sur le corps principal pour former un étau avec la butée externe, le corps principal comprenant un dispositif de serrage de l'étau, et en ce que le dispositif de serrage comprend un levier à came destiné à agir sur la butée interne pour exercer un serrage de l'étau.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1 et 2 illustrent schématiquement un réservoir de chasse d'eau équipé d'un robinet de remplissage selon l'invention ;
- les figures 3 et 4 illustrent schématiquement un robinet de remplissage selon un premier mode de réalisation de l'invention, respectivement selon une vue éclatée et en coupe ;
- les figures 5 à 9 illustrent différentes étapes d'installation, sur la paroi d'un réservoir, d'un robinet de remplissage selon le premier mode de réalisation de l'invention.

Dans la suite de la description, ainsi que sur les illustrations, l'invention est appliquée au montage d'un robinet de remplissage sur le fond d'un réservoir. Toutefois, plus généralement, l'invention peut être appliquée au montage sur toutes les parois du réservoir, et notamment les parois latérales.

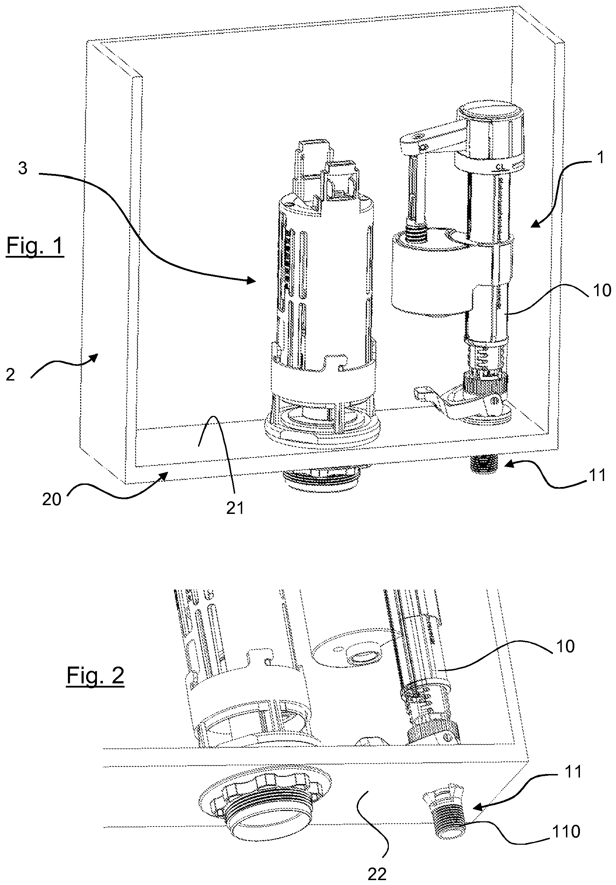

Tel que cela apparaît sur les figures 1 et 2, l'invention concerne le montage d'un robinet de remplissage 1 à l'intérieur d'un réservoir 2, et plus précisément sur le fond 20 du réservoir, ce fond étant conçu pour présenter un orifice de vidange au travers duquel l'eau du réservoir est déversée lors d'une chasse d'eau.

Un bâti 3 de mécanisme de chasse d'eau est classiquement monté sur l'orifice de vidange du fond du réservoir.

Le fond 20 du réservoir présente donc un orifice dédié au passage du robinet de remplissage et s'étendant entre la face interne du fond et la face externe du fond. Le robinet de remplissage comprend quant à lui :
- un corps principal 10 destiné à s'étendre à l'intérieur du réservoir ;
- une extrémité de raccordement 11 destinée à s'étendre à l'extérieur du réservoir, et présentant un filetage 110 en vue de la coupler à un tuyau d'alimentation en eau.

Selon le principe de l'invention, l'extrémité de raccordement 11 est pourvue d'une butée externe 12 radialement déformable.

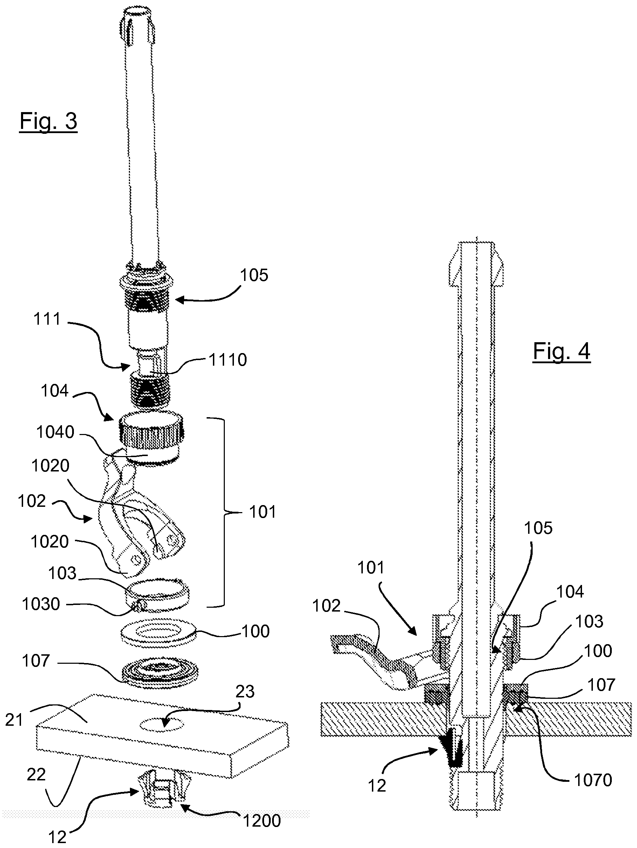

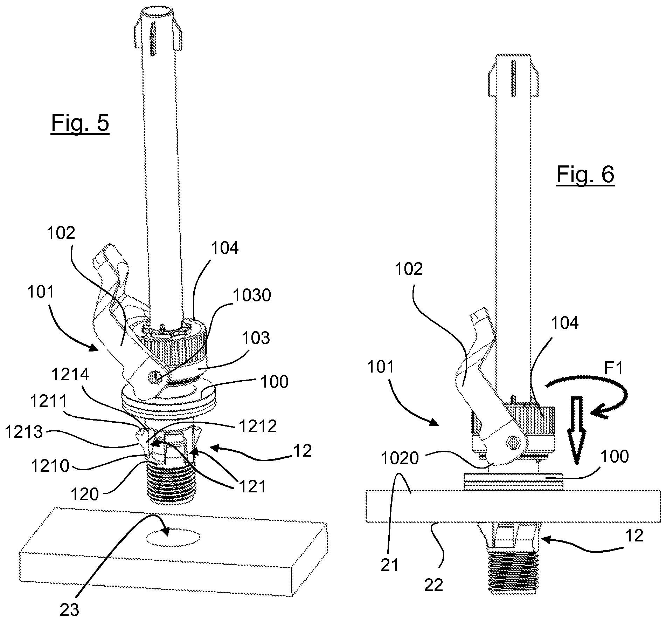

En référence aux figures 3 et 5, cette butée externe prend la forme, selon le présent mode de réalisation, d'une bague 120 pourvue de clips 121 radialement déformables qui comprennent chacun :
- une base flexible 1210 ;
- une surface de contact 1211 destinée à être amenée en appui contre la face externe 22 du fond du réservoir, reliée à la base flexible 1210 par un corps 1212 présentant une rampe externe 1213 ;
- une extrémité de centrage 1214 destinée à s'étendre à l'intérieur de l'orifice.

Avec de tels clips sur la butée externe, celle-ci peut être engagée de l'intérieur du réservoir vers l'extérieur de celui-ci au travers de l'orifice 23 du fond du réservoir. En effet, les bases flexibles des clips s'inscrivant dans un périmètre de diamètre inférieur à celui du périmètre dans lequel s'inscrivent les surfaces de contact, l'engagement des clips dans l'orifice va contraindre les rampes, au contact des bords de l'orifice, à transmettre un effort sur les bases flexibles qui va se traduire par un déplacement centripète des clips. Une fois libérés de cet effort, c'est-à-dire une fois les clips sortis de l'orifice, ceux-ci se déploient pour reprendre leur forme et position initiales. Les surfaces de contact forment ensemble surface annulaire (discontinue) d'un diamètre supérieur à celui de l'orifice.

De plus, la bague 120 est fendue, la fente 1200 (figure 1) permettant la mise en place de la butée externe 12 à l'intérieur d'une gorge annulaire 111 de l'extrémité de raccordement, à l'intérieur de laquelle la butée externe est maintenue solidaire axialement de l'extrémité de raccordement. Avec une telle conception de la butée externe, son montage est obtenu en venant plaquer radialement la fente 1200 contre le fond 1110 de la gorge annulaire, puis en exerçant une poussée radiale sur la butée externe, contre le fond 1110 de façon à forcer un écartement de la fente jusqu'à ce que celle s'élargisse au point de permettre le passage de la butée sur le fond, la bague venant ensuite se rétracter en entourant le fond. Bien entendu, la hauteur de la butée externe et celle de la gorge annulaire sont ajustées l'une à l'autre de façon à réduite au maximum le jeu axial de la butée dans la gorge.

Par ailleurs, selon le principe de l'invention, le corps principal porte quant à lui une butée interne 100.

La butée interne 100 et la butée externe sont montées pour former un étau destiné à être fermé et serré sur le fond du réservoir. En l'occurrence, la butée externe étant fixe axialement sur l'extrémité de raccordement, la butée interne est montée mobile axialement sur corps principal du robinet de remplissage.

Pour assurer la fixation du robinet de remplissage sur le fond du réservoir, le robinet comprend un dispositif de serrage 101 intégré au corps principal, et destiné à agir sur la butée interne pour engendrer un serrage de l'étau de part et d'autre du fond du réservoir.

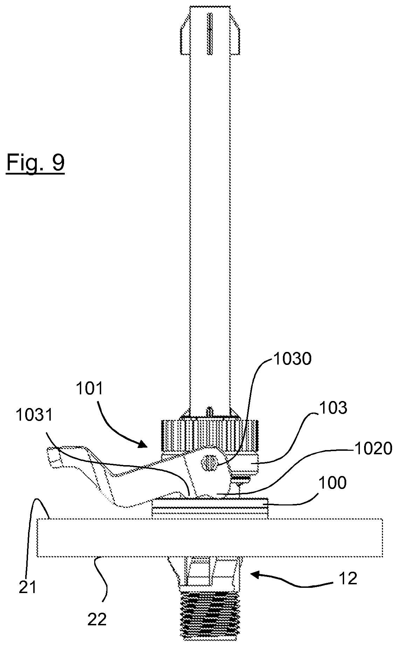

Tel qu'illustré par les figures 3 à 9, le dispositif de serrage comprend un levier à came 102 prenant la forme d'un étrier dont chaque branche est reliée de façon pivotante sur une bague support 103. Cette bague support présente une paire d'ergot 1030 diamétralement opposés, définissant ensemble l'axe de pivotement du levier à came 102. Les branches du levier à came 102 présentent chacune une came 1020 destinée à être amenée en appui sur la butée interne, le levier étant pivoté comme cela va être explicité par la suite pour serrer, sur le fond du réservoir, l'étau constitué par les butées interne et externe.

De plus, le levier est monté ajustable en position axiale sur le corps principal du robinet de remplissage. Pour cela, une bague vissable/dévissable 104 est montée sur une portion filetée 105 du corps principal, la bague support 103 étant porté par la bague vissable/dévissable 104 en étant montée sur une portion inférieure 1040 de la bague vissable/dévissable 104 (le diamètre intérieur de la bague support 103 étant ajusté au diamètre externe de la portion inférieure 1040).

On note que la butée interne 100 est également portée par la portion inférieure 1040 de la bague vissable/dévissable 104, la butée interne pouvant coulisser axialement sur la portion inférieure 1040.

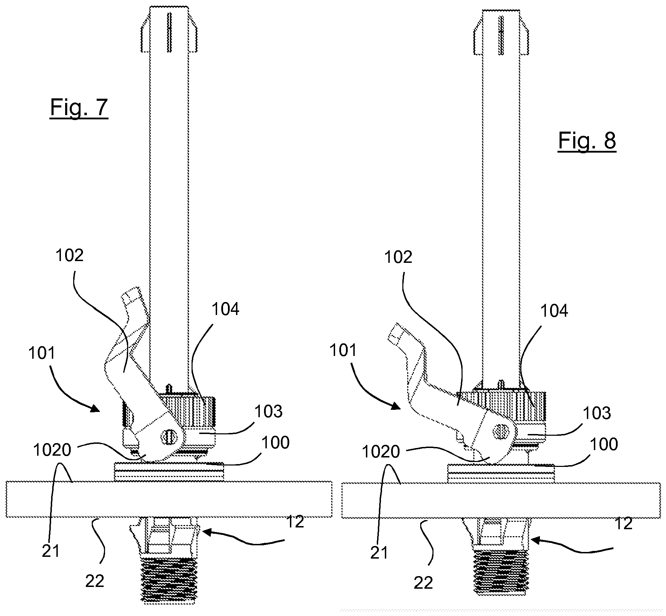

Selon le mode de réalisation de réalisation qui vient d'être décrit, le montage du robinet de remplissage sur le fond du réservoir s'effectue de la façon suivante :
- l'extrémité de raccordement est amenée en regard de l'orifice 23 du fond du réservoir (figure 5), puis engagée au travers de l'orifice 23 jusqu'à ce que la butée externe soit intégralement sous la face externe du fond (figure 6) ;
- un réglage de la position axiale de la bague support 103, et donc du levier à came 102, sur le corps principal est effectué en faisant tourner la bague vissable/dévissable 104 sur la portion filetée 105 du corps principal (l'ensemble bague vissable/dévissable/bague support/levier à came montant ou descendant sur le corps principal sous l'effet du vissage ou du dévissage), tel qu'illustré par la flèche F1 sur la figure 6 ;
- quand le levier à came est suffisamment descendu pour pouvoir agir sur la butée interne, l'étau étant alors desserré comme le fait apparaître la position de la butée externe distante de la face externe 22 (figure 7), celui est pivoté vers le bas : la came agit à la façon d'un excentrique qui provoque la remontée de l'axe de pivotement et donc du corps principal et de l'extrémité de raccordement, ce qui engendre le fait de plaquer les surfaces de contact des clips de la butée externe 12 contre la face externe 22 (l'étau constitué par les butée interne et externe est alors serré sur le fond du réservoir) ;
- le pivotement du levier est légèrement poursuivie jusqu'à amener un bossage 1031 du levier au contact de la butée interne, ce qui entraîne une sorte de verrouillage en position du levier à came.

## Revendications

1. Robinet de remplissage (1) destiné à être installé sur un réservoir de toilettes comprenant une paroi présentant un orifice (23) dédié au passage du robinet de remplissage (1) et s'étendant entre une face interne (21) et une face externe (22) du réservoir, le robinet de remplissage comprenant :
- un corps principal (10) destiné à s'étendre à l'intérieur du réservoir et portant une butée interne (100) ;
- une extrémité de raccordement (11) destinée à s'étendre à
l'extérieur du réservoir et portant une butée externe (12), **caractérisé en ce que** la butée externe (12) est solidaire axialement de l'extrémité de raccordement (11) et est radialement déformable pour se rétracter radialement à l'intérieur de l'orifice (23) de la paroi du réservoir lors d'un passage de l'intérieur vers l'extérieur du réservoir, et se déployer radialement pour former une butée contre la face externe (22) du réservoir,
et **en ce que** la butée interne (100) est montée mobile axialement sur le corps principal (10) pour former un étau avec la butée externe (12), le corps principal (10) comprenant un dispositif de serrage (101) de l'étau, et **en ce que** le dispositif de serrage (101) comprend un levier à came (102) destiné à agir sur la butée interne (100) pour exercer un serrage de l'étau.

2. Robinet de remplissage selon la revendication 1, **caractérisé en ce que** le levier à came (102) est monté de façon ajustable en position sur le corps principal (10).

3. Robinet de remplissage selon la revendication 2, **caractérisé en ce que** le corps principal (10) présente une portion filetée (105), et **en ce que** le levier à came (102) est ajustable en position par l'intermédiaire d'une bague vissable/dévissable (104) sur la portion filetée (105).

4. Robinet de remplissage selon l'une quelconque des revendications 1 à 3, **caractérisé en ce qu'**il comprend un joint (107) destiné à être intercalé entre la butée interne et la face interne du fond du réservoir.

5. Robinet de remplissage selon la revendication 4, **caractérisé en ce que** le joint présente une face inférieure pourvue d'une extension tronconique (1070).

6. Robinet de remplissage selon l'une quelconque des revendications 1 à 5, **caractérisé en ce que** la butée externe (12) prend la forme d'une bague (120) pourvue de clips (121) radialement déformables.

7. Robinet de remplissage selon la revendication 6, **caractérisé en ce que** les clips (121) comprennent :
- une base flexible (1210) ;
- une surface de contact (1211) destinée à être amenée en appui contre la face externe de la paroi du réservoir, reliée à la base flexible (1210) par un corps (1212) présentant une rampe externe (1213) ;
- une extrémité de centrage (1214) destinée à s'étendre à l'intérieur de l'orifice.

8. Réservoir (2) d'eau pour toilettes, incluant au moins un robinet de remplissage (1) selon la revendication 1, le réservoir comprenant une paroi présentant un orifice (23) dédié au passage du robinet de remplissage (1) et s'étendant entre une face interne (21) et une face externe (22) du réservoir (2).

## Patentansprüche

1. Füllventil (1), das zur Installation auf einem Toilettenspülkasten bestimmt ist, umfassend eine Wand, die eine Öffnung (23) aufweist, die für den Durchgang des Füllventils (1) bestimmt ist und sich zwischen einer Innenseite (21) und einer Außenseite (22) des Spülkastens erstreckt, wobei das Füllventil umfasst:
- einen Hauptkörper (10), der bestimmt ist, sich innerhalb des Spülkastens zu erstrecken und einen inneren Anschlag (100) trägt;
- ein Anschlussende (11), das bestimmt ist, sich außerhalb des Spülkastens zu erstrecken und einen äußeren Anschlag (12) trägt,
**dadurch gekennzeichnet, dass** der äußere Anschlag (12) mit dem Anschlussende (11) axial fest verbunden ist und radial verformbar ist, um sich innerhalb der Öffnung (23) der Wand des Spülkastens bei einem Durchgang von innerhalb nach außerhalb des Spülkastens radial zurückzuziehen und sich radial zu entfalten, um einen Anschlag gegen die Außenseite (22) des Spülkastens zu bilden,
und dass der innere Anschlag (100) auf dem Hauptkörper (10) axial beweglich angebracht ist, um mit dem äußeren Anschlag (12) eine Zwinge zu bilden, wobei der Hauptkörper (10) eine Spannvorrichtung (101) der Zwinge umfasst,
und dass die Spannvorrichtung (101) einen Nockenhebel (102) umfasst, der bestimmt ist, auf den inneren Anschlag (100) einzuwirken, um die Zwinge zu spannen.

2. Füllventil nach Anspruch 1, **dadurch gekennzeichnet, dass** der Nockenhebel (102) auf dem Hauptkörper (10) in Position einstellbar angebracht ist.

3. Füllventil nach Anspruch 2, **dadurch gekennzeichnet, dass** der Hauptkörper (10) einen Gewindeabschnitt (105) aufweist und dass der Nockenhebel (102) über einen auf dem Gewindeabschnitt (105) an-/abschraubbaren Ring (104) in Position einstellbar ist.

4. Füllventil nach einem der Ansprüche 1 bis 3, **dadurch gekennzeichnet, dass** es eine Dichtung (107) umfasst, die bestimmt ist, zwischen dem inneren Anschlag und der Innenseite des Bodens des Spülkastens zwischengestellt zu sein.

5. Füllventil nach Anspruch 4, **dadurch gekennzeichnet, dass** die Dichtung eine Unterseite aufweist, die mit einer kegelstumpfförmigen Erweiterung (1070) versehen ist.

6. Füllventil nach einem der Ansprüche 1 bis 5, **dadurch gekennzeichnet, dass** der äußere Anschlag (12) die Form eines Rings (120) annimmt, der mit radial verformbaren Clipsen (121) versehen ist.

7. Füllventil nach Anspruch 6, **dadurch gekennzeichnet, dass** die Clipse (121) umfassen:
- eine flexible Basis (1210);
- eine Kontaktfläche (1211), die bestimmt ist, in Abstützung gegen die Außenseite der Wand des Spülkastens geführt zu werden, die mit der flexiblen Basis (1210) durch einen Körper (1212) verbunden ist, der eine äußere Rampe (1213) aufweist;
- ein Zentrierende (1214), das bestimmt ist, sich innerhalb der Öffnung zu erstrecken.

8. Wasserspülkasten (2) für Toiletten, einschließend mindestens ein Füllventil (1) nach Anspruch 1, wobei der Spülkasten eine Wand umfasst, die eine spezielle Öffnung (23) für den Durchgang des Füllventils (1) aufweist und sich zwischen einer Innenseite (21) und einer Außenseite (22) des Spülkastens (2) erstreckt.

## Claims

1. Fill valve (1) designed to be installed on a toilet tank comprising a wall having an opening (23) dedicated to the passage of the fill valve (1) and extending between an inner face (21) and an outer face (22) of the tank, the fill valve comprising:
- a main part (10) designed to extend inside the tank and carrying an inner stop (100);
- a connecting end (11) designed to extend outside the tank and carrying an outer stop element (12);
**characterised in that** the outer stop element (12) is axially integral with the connecting end (11) and is radially deformable so as to be able to retract radially into the opening (23) in the tank wall when it moves from the inside to the outside of the tank, and to expand radially so as to form a stop against the outer face (22) of the tank,
and **in that** the inner stop (100) is axially movable mounted on the main part (10) to form a vice with the outer stop element (12), the main part (10) comprising a gripping device (101) of the vice, and **in that** the gripping device (101) comprises a cam lever (102) designed to act on the inner stop (100) to exert a gripping of the vice.

2. Fill valve according to claim 1, **characterised in that** the cam lever (102) is adjustably mounted in position on the main part (10).

3. Fill valve according to claim 2, **characterised in that** the main part (10) has a threaded portion (105), and **in that** the cam lever (102) is adjustable in position by way of a screwable/unscrewable ring (104) on the threaded portion (105) .

4. Fill valve according to any one of claims 1 to 3, **characterised in that** it comprises a seal (107) designed to be interleaved between the inner stop and the inner face of the bottom of the tank.

5. Fill valve according to claim 4, **characterised in that** the seal has a lower face provided with a truncated extension (1070).

6. Fill valve according to any one of claims 1 to 5, **characterised in that** the outer stop element (12) takes the form of a ring (120) provided with radially deformable clips (121).

7. Fill valve according to claim 6, **characterised in that** the clips (121) comprise:
- a flexible base (1210);
- a contact surface (1211) designed to be born against the outer face of the tank wall, connected to the flexible base (1210) by a part (1212) having an outer rail (1213);
- a centring end (1214) designed to extend inside the opening.

8. Water tank (2) for a toilet, including at least one fill valve (1) according to claim 1, the tank comprising a wall having an opening (23) dedicated to the passage of the fill valve (1) and extending between an inner face (21) and an outer face (22) of the tank (2).
